# FASCICULE DE BREVET EUROPEEN

(11) **EP 3 257 717 B1**
(45) Date de publication et mention de la délivrance du brevet: **07.08.2019**
(21) Numéro de dépôt: 17176047.3
(22) Date de dépôt: 14.06.2017
(51) Int. Cl.: B61L 15/00, B60L 3/02, B60K 28/06, B61L 3/00

(54) **DISPOSITIF DE VEILLE POUR CONDUCTEUR DE VÉHICULE FERROVIAIRE**
STANDBY-VORRICHTUNG FÜR FAHRER EINES SCHIENENFAHRZEUGS
A WATCH DEVICE FOR A CONDUCTOR OF A RAILWAY VEHICLE

(30) Priorité: 16.06.2016 FR 1655588
(43) Date de publication de la demande: 20.12.2017
(73) Titulaire: ALSTOM Transport Technologies, 93400 Saint-Ouen (FR)
(72) Inventeur: FOURNEAU, David, 17220 CLAVETTE (FR)
(74) Mandataire: Lavoix

(56) Documents cités:
- EP-A2- 0 752 682
- WO-A1-2009/032420
- DE-A1-102012 105 160
- DE-A1-102012 215 588

## Description

La présente invention concerne un dispositif de veille pour conducteur de véhicule ferroviaire, notamment de véhicule ferroviaire urbain, par exemple de tramway.

Un dispositif de veille est destiné à surveiller en continu l'état de veille d'un conducteur de véhicule ferroviaire urbain, afin de provoquer un freinage d'urgence en cas de défaut de vigilance du conducteur, par exemple due à une perte de conscience.

On connaît, dans l'état de la technique, notamment d'après EP 0 752 682, un dispositif de veille comportant une commande sensitive de veille, que le conducteur doit actionner régulièrement, par appui et/ou relâchement. Une telle commande sensitive est généralement agencée sur un levier de commande de traction/freinage, ou sur une pédale de veille.

Par exemple, le conducteur doit, de manière cyclique, appuyer sur la commande sensitive de veille pendant une durée maximale de 8 secondes, puis relâcher la commande sensitive pendant une durée maximale de 3 secondes. S'il ne respecte pas cette séquence, un signal sonore l'avertit.

Dans le cas où le conducteur reprend le cycle normal d'appui/relâchement, le signal sonore s'interrompt et l'exploitation peut se poursuivre normalement.

En revanche, si, à la fin d'une temporisation par exemple de deux secondes après le déclenchement du signal sonore, le conducteur n'a pas repris le cycle normal d'appui/relâchement, le freinage d'urgence est déclenché jusqu'à l'arrêt complet du véhicule.

Un tel dispositif de veille présente plusieurs inconvénients.

En particulier, dans le cas où le conducteur est distrait par un élément extérieur, par exemple concentré sur la circulation, il peut oublier de poursuivre le cycle, ce qui peut causer un freinage indésirable, pouvant entraîner la chute de passagers.

En outre, l'action répétitive d'appui/relâchement peut entrainer des douleurs physiques au conducteur, notamment des troubles musculosquelettiques.

L'invention a notamment pour but de remédier à ces inconvénients, en proposant un dispositif de veille plus confortable pour le conducteur, et dont l'activation ne peut pas être oubliée, tout en présentant un niveau de sécurité équivalent à un dispositif de veille de l'état de la technique.

A cet effet, l'invention a pour objet un dispositif de veille selon la revendication 1.

L'invention prévoit une fonction de veille qui soit transparente pour le conducteur, en étant activée par les actions normales de conduite.

A cet effet, les premiers moyens de veille prennent en compte une pluralité d'informations de conduite avec un délai court, et les seconds moyens de veille permettent de maintenir un haut niveau de sécurité, mais avec un délai plus long.

Un dispositif de veille selon l'invention peut comporter l'une ou plusieurs des caractéristiques suivantes, prises seules ou selon toutes combinaisons techniquement envisageables.
- Le dispositif de veille est destiné à équiper un véhicule ferroviaire comportant une unité de contrôle et de gestion du train, les informations informatiques étant fournies aux moyens informatiques de récupération par cette unité de contrôle et de gestion du train.
- La première durée prédéfinie est d'environ 10 secondes, et la seconde durée prédéfinie est d'environ 1 minute.
- Le dispositif de veille comporte des moyens d'avertissement commandés par les premiers et seconds moyens de veille, propres à être activés lorsque les moyens informatiques d'analyse des informations informatiques récupérées ne détectent pas de variations des informations informatiques pendant la première durée prédéfinie, ou lorsque les moyens électroniques d'analyse des informations mécaniques récupérées ne détectent pas d'actionnement des moyens de conduite pendant la seconde durée prédéfinie.
- Les moyens d'avertissement comportent un avertisseur lumineux et un avertisseur sonore, les moyens d'avertissement étant configurés pour que l'avertisseur lumineux soit actionné préalablement à l'avertisseur sonore, durant un premier intervalle de temps prédéfini avant l'actionnement de l'avertisseur sonore.
- Le dispositif de veille comporte des moyens d'activation d'un système de freinage du véhicule ferroviaire commandés par les premiers et seconds moyens de veille, propres à être activés lorsque les moyens informatiques d'analyse des informations informatiques récupérées ne détectent pas de variations des informations informatiques pendant la première durée prédéfinie, ou lorsque les moyens électroniques d'analyse des informations mécaniques récupérées ne détectent pas d'actionnement des moyens de conduite pendant la seconde durée prédéfinie.
- Les moyens d'activation sont configurés pour être actionnés à la suite des moyens d'avertissement.
- Les seconds moyens de veille sont prioritaires sur les premiers moyens de veille pour la commande des moyens d'activation du freinage.
- Les premiers et seconds moyens de veille sont désactivables, par exemple aux moyens de premiers et seconds dispositifs d'inhibition respectifs.

L'invention concerne également un procédé de veille d'un conducteur de véhicule ferroviaire selon la revendication 10.

L'invention sera mieux comprise à la lecture de la description qui va suivre, donnée uniquement à titre d'exemple et faite en se référant à la figure annexée, représentant schématiquement un dispositif 10 de veille selon un exemple de mode de réalisation de l'invention.

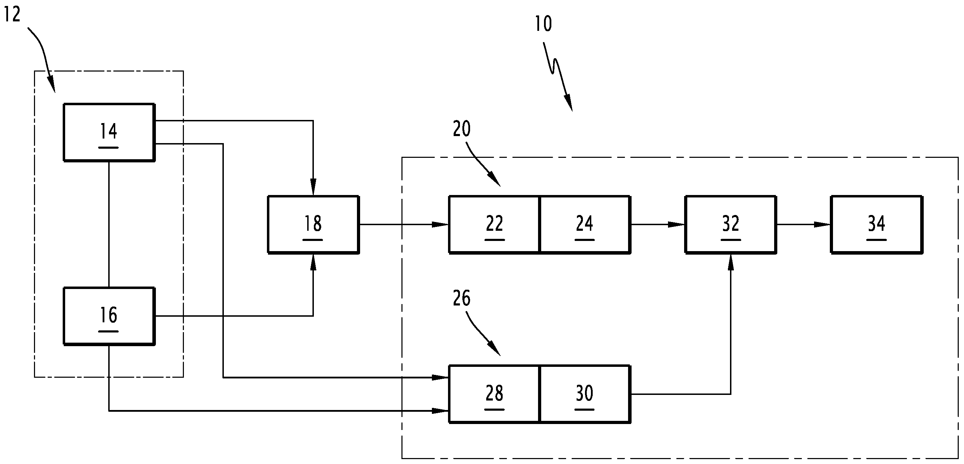

On a représenté sur la figure 1 un dispositif 10 de veille pour conducteur de véhicule ferroviaire, notamment un véhicule ferroviaire urbain.

Le véhicule ferroviaire est par exemple un tramway, mais pourrait être en variante un métro, ou tout autre véhicule ferroviaire envisageable.

Le véhicule ferroviaire comporte de manière classique des moyens de conduite 12, comprenant notamment un manipulateur 14 de commande de traction et de freinage du véhicule, et un tableau de commande 16 présentant au moins un bouton poussoir.

Le véhicule ferroviaire comporte également, de manière classique, une unité 18 de contrôle et de gestion du train, généralement désignée sous l'acronyme TCMS, pour « Train Control Management System ».

L'unité de contrôle et de gestion du train 18 est propre à générer, de manière classique, des informations informatiques de conduite, en fonction des manipulations des moyens de conduite 12 par le conducteur du véhicule. Les informations informatiques de conduite comprennent notamment l'accélération/décélération du véhicule.

L'évolution des informations informatiques est liée à l'activation des moyens de conduite 12.

Il apparaît que les informations informatiques de conduite sont très variables, ce qui permet de garantir une flexibilité sur les actions conducteurs qui peuvent être prises en compte pour la fonction de veille.

Le dispositif de veille 10 comporte des premiers moyens de veille 20 destinés à surveiller l'activité du conducteur du véhicule ferroviaire.

Les premiers moyens de veille 20 comprennent des moyens informatiques 22 de récupération des informations informatiques de conduite générées par l'unité de contrôle et de gestion 18.

Les premiers moyens de veille 20 comprennent également des moyens informatiques 24 d'analyse des informations informatiques récupérées, propres à détecter une absence d'évolution des informations informatiques récupérées pendant une première durée prédéfinie.

La première durée prédéfinie est une durée relativement courte, notamment 10 secondes.

Lorsque les moyens d'analyse 24 ne détectent pas d'évolution des informations informatiques pendant la première durée, cela signifie que les moyens de conduite 12 n'ont pas été activés pendant cette première durée.

Le dispositif de veille 10 comporte également des seconds moyens de veille 26, destinés à surveiller l'activité du conducteur du véhicule ferroviaire en parallèle des premiers moyens de veille 20. Ces seconds moyens de veille 26 sont indépendants des premiers moyens de veille 20.

Les seconds moyens de veille 26 comportent des moyens électroniques 28 de récupération par relayage d'informations électro-mécaniques de conduite relatives à l'actionnement des moyens de conduite 12.

Ces informations mécaniques concernent un changement d'état des moyens de conduite 12, par exemple l'actionnement d'un bouton poussoir du panneau de contrôle 16, ou le déplacement du manipulateur 14.

De tels moyens électroniques 28 de récupération par relayage sont similaires à ceux employés dans l'état de la technique pour détecter l'activation d'une commande sensitive de veille, mais ils sont reliés directement aux moyens de conduite 12 et non pas à une commande sensitive dédiée.

Les seconds moyens de veille 26 comportent par ailleurs des moyens électroniques 30 d'analyse des informations mécaniques récupérées, propres à détecter l'absence d'actionnement des moyens de conduite pendant une seconde durée prédéfinie.

Il est à noter que la sécurité des seconds moyens de veille 26 par relayage est supérieure à la sécurité des premiers moyens de veille 20 par informatique.

Toutefois, un changement d'état des moyens de conduite ne survient pas nécessairement toutes les 10 secondes. C'est pourquoi les premiers moyens de veille 20 sont nécessaires pour conserver une surveillance de l'activité du conducteur sur une courte période.

La seconde durée prédéfinie est supérieure à la première durée prédéfinie, par exemple de l'ordre d'une minute. Cette seconde durée est choisie pour qu'il soit suffisamment probable qu'un changement d'état des moyens de conduite 12 soit détecté durant cette seconde durée.

Les premiers 20 et seconds 26 moyens de veille sont reliés à des moyens d'avertissement 32, destinés à avertir le conducteur d'une absence d'activité, au terme de la première durée prédéfinie lorsque les premiers moyens de veille 20 ne détectent pas d'évolution des informations informatiques, et respectivement au terme de la seconde durée prédéfinie lorsque les seconds moyens de veille 26 ne détectent pas de changement d'état des moyens de conduite 12.

Lorsque le conducteur est averti par les moyens d'avertissement 32, il devra réaliser une action de conduite pour montrer qu'il n'a pas perdu connaissance.

Les moyens d'avertissement 32 comportent avantageusement un avertisseur lumineux, qui est préalablement actionné au terme de la première ou respectivement seconde durée prédéfinie.

Avantageusement, les moyens d'avertissement 32 comportent également un avertisseur sonore, actionné à la suite de l'avertisseur lumineux en l'absence de réaction du conducteur pendant un court premier intervalle de temps (par exemple 2 secondes) après l'activation de l'avertisseur lumineux. On notera que l'avertisseur lumineux est destiné à éviter une activation brutale de l'avertisseur sonore, afin de ne pas provoquer de stress chez le conducteur.

En variante ou de manière complémentaire, l'avertisseur sonore pourrait avoir un volume sonore augmentant progressivement.

Le dispositif de veille 10 comporte par ailleurs des moyens 34 d'activation d'un système de freinage du véhicule ferroviaire. De tels moyens d'activation 34 sont connus en soi.

Ces moyens d'activation 34 sont actionnés à la suite de l'avertisseur sonore en l'absence de réaction du conducteur pendant un second intervalle de temps (par exemple 2 secondes) après l'activation de l'avertisseur sonore.

L'actionnement de ces moyens d'activation 34 entraîne le freinage d'urgence du véhicule ferroviaire, le conducteur ayant été considéré comme ayant perdu connaissance et/ou ne pouvant plus conduire le véhicule de manière sécurisée.

Le fonctionnement du dispositif de veille 10 sera décrit ci-dessous.

Il est à noter que le dispositif de veille 10 n'est actif que lorsque le véhicule est en état de marche. En effet, à l'arrêt, il n'est pas nécessaire de surveiller l'activité du conducteur. En outre, un freinage d'urgence n'aurait aucun effet à l'arrêt.

Lors de la conduite du véhicule, le conducteur actionne les moyens de conduite 12. L'unité de contrôle 18 génère alors des informations informatiques de conduite, qui varient à court intervalle.

Chaque fois que les premiers moyens de veille 20 détectent une variation des informations informatiques, une première temporisation est réinitialisée. Lorsqu'aucune variation des informations informatiques n'est détectée, la première temporisation s'incrémente, jusqu'à atteindre la première durée prédéfinie. Dans ce cas, les moyens d'avertissement 32 sont activés. Tout d'abord, l'avertisseur lumineux est activé, puis l'avertisseur sonore, comme indiqué précédemment.

Si une variation des informations informatiques est alors détectée, les moyens d'avertissement 32 sont désactivés, et la première temporisation est réinitialisée.

Dans le cas contraire, si aucune variation des informations informatiques n'est détectée pendant que les moyens d'avertissement sont actifs, pendant le premier puis le second intervalles de temps, les moyens d'activation de freinage 34 sont activés pour un freinage d'urgence.

Par ailleurs, parallèlement à ce fonctionnement des premiers moyens de veille 20, et indépendamment de ceux-ci, une seconde surveillance est effectuée par les seconds moyens de veille 26.

Chaque fois que les seconds moyens de veille 26 détectent un changement d'état des moyens de conduite 12, une seconde temporisation est réinitialisée. Lorsqu'aucun changement d'état des moyens de conduite 12 n'est détecté, la seconde temporisation s'incrémente, jusqu'à atteindre la seconde durée prédéfinie. Dans ce cas, les moyens d'avertissement 32 sont activés. Tout d'abord, l'avertisseur lumineux est activé, puis l'avertisseur sonore, comme indiqué précédemment.

Si un changement d'état des moyens de conduite 12 est alors détectée, les moyens d'avertissement 32 sont désactivés, et la seconde temporisation est réinitialisée.

Dans le cas contraire, si aucun changement d'état des moyens de conduite 12 n'est détecté pendant que les moyens d'avertissement sont actifs, pendant le premier puis le second intervalles de temps, les moyens d'activation de freinage 34 sont activés pour un freinage d'urgence.

On notera que la première temporisation n'est pas réinitialisée en cas de détection d'un changement d'état des moyens de conduite 12, et que la seconde temporisation n'est pas réinitialisée en cas de détection d'une variation des informations informatiques.

Les premiers moyens de veille 20 présentent un niveau de sécurité moindre qu'un dispositif de veille de l'état de la technique. Les secondes moyens de veille 26 permettent, par redondance, d'améliorer la sécurité du dispositif de veille 10 selon l'invention, pour un niveau de sécurité équivalent à un dispositif de l'état de la technique.

En cas de défaillance des premiers moyens de veille 20, telle que le freinage d'urgence ne serait pas déclenché par les premiers moyens de veille 20 malgré une absence d'activité du conducteur, alors cette absence d'activité serait détectée par les seconds moyens de veille 26, qui déclencheraient le freinage d'urgence.

Avantageusement, les seconds moyens de veille 26 sont prioritaires sur les premiers moyens de veille 20 pour la commande des moyens d'avertissement 32 et des moyens d'activation 34 du freinage. Ainsi, dans le cas d'une défaillance des premiers moyens de veille 20, telle que les avertisseurs lumineux ou sonore, ou le freinage d'urgence seraient déclenchés par les premiers moyens de veille 20 malgré une activité du conducteur, alors cet avertissement et/ou ce freinage d'urgence serait annulé en cas d'activité détectée par les seconds moyens de veille 26.

Avantageusement, les premiers 20 et seconds 26 moyens de veille sont désactivables, par exemple aux moyens de premiers et seconds dispositifs d'inhibition respectifs. Les dispositifs d'inhibition comportent pas exemple des commutateurs plombés, actionnables par le conducteur du véhicule.

Ainsi, en cas de défaillance des premiers 20 ou seconds 26 moyens de veille, ceux-ci peuvent être désactivés séparément pour continuer le service commercial jusqu'à une fin de service par exemple.

On notera que l'invention n'est pas limitée au mode de réalisation décrit, mais pourrait présenter diverses variantes complémentaires.

## Revendications

1. Dispositif de veille (10) pour conducteur de véhicule ferroviaire comportant des moyens de conduite (12), comportant :
- des premiers moyens de veille (20), comprenant :
• des moyens informatiques (22) de récupération d'informations informatiques de conduite fonctions d'un actionnement des moyens de conduite,
• des moyens informatiques (24) d'analyse des informations informatiques récupérées, propres à détecter l'absence des variations des informations informatiques pendant une première durée prédéfinie,
**caractérisé en ce que** le dispositif de veille (10) comporte des seconds moyens de veille (26), indépendants des premiers moyens de veille (20), et comprenant :
• des moyens électroniques (28) de récupération par relayage d'informations mécaniques de conduite relatives à l'actionnement des moyens de conduite (12), et
• des moyens électroniques (30) d'analyse des informations mécaniques récupérées, propres à détecter l'absence d'actionnement des moyens de conduite pendant une seconde durée prédéfinie, telle que la première durée prédéfinie est inférieure à la seconde durée prédéfinie.

2. Dispositif de veille (10) selon la revendication 1, destiné à équiper un véhicule ferroviaire comportant une unité (18) de contrôle et de gestion du train, les informations informatiques étant fournies aux moyens informatiques de récupération (22) par cette unité (18) de contrôle et de gestion du train.

3. Dispositif de veille (10) selon la revendication 1 ou 2, dans laquelle la première durée prédéfinie est d'environ 10 secondes, et la seconde durée prédéfinie est d'environ 1 minute.

4. Dispositif de veille (10) selon l'une quelconque des revendications précédentes, comportant des moyens d'avertissement (32) commandés par les premiers (20) et seconds (26) moyens de veille, propres à être activés lorsque les moyens informatiques (24) d'analyse des informations informatiques récupérées ne détectent pas de variations des informations informatiques pendant la première durée prédéfinie, ou lorsque les moyens électroniques (30) d'analyse des informations mécaniques récupérées ne détectent pas d'actionnement des moyens de conduite pendant la seconde durée prédéfinie.

5. Dispositif de veille (10) selon la revendication 4, dans lequel les moyens d'avertissement (32) comportent un avertisseur lumineux et un avertisseur sonore, les moyens d'avertissement (32) étant configurés pour que l'avertisseur lumineux soit actionné préalablement à l'avertisseur sonore, durant un premier intervalle de temps prédéfini avant l'actionnement de l'avertisseur sonore.

6. Dispositif de veille (10) selon l'une quelconque des revendications précédentes, comportant des moyens (34) d'activation d'un système de freinage du véhicule ferroviaire commandés par les premiers (20) et seconds (26) moyens de veille, propres à être activés lorsque les moyens informatiques (24) d'analyse des informations informatiques récupérées ne détectent pas de variations des informations informatiques pendant la première durée prédéfinie, ou lorsque les moyens électroniques (30) d'analyse des informations mécaniques récupérées ne détectent pas d'actionnement des moyens de conduite pendant la seconde durée prédéfinie.

7. Dispositif de veille (10) selon la revendication 6, prise en combinaison avec la revendication 4 ou 5, dans lequel les moyens d'activation (34) sont configurés pour être actionnés à la suite des moyens d'avertissement (32).

8. Dispositif de veille (10) selon la revendication 6 ou 7, dans lequel les seconds moyens de veille (26) sont prioritaires sur les premiers moyens de veille (20) pour la commande des moyens d'activation (34) du freinage.

9. Dispositif de veille (10) selon l'une quelconque des revendications précédentes, dans lequel les premiers (20) et seconds (26) moyens de veille sont désactivables, par exemple aux moyens de premiers et seconds dispositifs d'inhibition respectifs.

10. Procédé de veille d'un conducteur de véhicule ferroviaire, au moyen d'un dispositif de veille (10) selon l'une quelconque des revendications précédentes, **caractérisé en ce qu'**il comporte :
- la récupération, par les moyens informatiques (22), d'informations informatiques de conduite, et la détection, par les moyens informatiques (24) de l'absence des variations des informations informatiques pendant une première durée prédéfinie, et
- de manière indépendante, la récupération par les moyens électroniques (28) d'informations mécaniques de conduite, et la détection, par les moyens électroniques (30) d'analyse, de l'absence d'actionnement des moyens de conduite pendant une seconde durée prédéfinie, telle la première durée prédéfinie est inférieure à la seconde durée prédéfinie.

## Patentansprüche

1. Überwachungsvorrichtung (10) für einen Führer eines Schienenfahrzeugs, das Führungsmittel (12) aufweist, aufweisend:
- erste Überwachungsmittel (20), aufweisend:
• computergestützte Mittel (22) zum Beschaffen von Computer-Fahrdaten in Abhängigkeit von einer Betätigung der Führungsmittel,
• computergestützte Mittel (24) zum Analysieren der beschafften Computerdaten, die dazu geeignet sind, die Abwesenheit von Veränderungen der Computerdaten während einer ersten vorher festgelegten Zeitdauer zu ermitteln,
**dadurch gekennzeichnet, dass** die Überwachungsvorrichtung (10) zweite Überwachungsmittel (26) aufweist, die unabhängig von den ersten Überwachungsmitteln (20) sind und die aufweisen:
• elektronische Mittel (28) zum Beschaffen, mittels Weiterleitens, mechanischer Fahrdaten bezüglich der Betätigung der Führungsmittel (12), und
• elektronische Mittel (30) zum Analysieren der beschafften mechanischen Daten, die dazu geeignet sind, das Fehlen der Betätigung der Führungsmittel während einer zweiten vorher festgelegten Zeitdauer zu ermitteln, wobei die erste vorher festgelegte Zeitdauer kürzer ist als die zweite vorher festgelegte Zeitdauer.

2. Überwachungsvorrichtung (10) gemäß Anspruch 1, die dazu eingerichtet ist, ein Schienenfahrzeug, das eine Steuerungs- und Verwaltungseinheit (18) des Zuges aufweist, auszustatten, wobei die Computerdaten mittels der Steuerungs- und Verwaltungseinheit (18) des Zuges den computergestützten Mitteln zum Beschaffen (22) bereitgestellt werden.

3. Überwachungsvorrichtung (10) gemäß Anspruch 1 oder 2, wobei die erste vorher festgelegte Zeitdauer ungefähr 10 Sekunden beträgt und die zweite vorher festgelegte Zeitdauer ungefähr 1 Minute beträgt.

4. Überwachungsvorrichtung (10) gemäß einem der vorangehenden Ansprüche, die Warnmittel (32) aufweist, die mittels der ersten Überwachungsmittel (20) und der zweiten Überwachungsmittel (26) angesteuert werden und die geeignet sind, aktiviert zu werden, wenn die computergestützten Mittel (24) zum Analysieren der beschafften Computerdaten keine Veränderungen der Computerdaten während der ersten vorher festgelegten Zeitdauer ermitteln oder wenn die elektronischen Mittel (30) zum Analysieren der beschafften mechanischen Daten keine Betätigung der Führungsmittel während der zweiten vorher festgelegten Zeitdauer ermitteln.

5. Überwachungsvorrichtung (10) gemäß Anspruch 4, wobei die Warnmittel (32) eine Warnleuchte und einen Warnton aufweisen, wobei die Warnmittel (32) dazu eingerichtet sind, dass die Warnleuchte vor dem Warnton betätigt wird und vor dem Betätigen des Warntons einen ersten vorher festgelegten Zeitraum andauert.

6. Überwachungsvorrichtung (10) gemäß einem der vorangehenden Ansprüche, die Mittel (34) zum Betätigen eines Bremssystems des Schienenfahrzeugs aufweist, die mittels des ersten Überwachungsmittels (20) und des zweiten Überwachungsmittels (26) angesteuert werden und die dazu geeignet sind, betätigt zu werden, wenn die computergestützten Mittel (24) zum Analysieren der beschafften Computerdaten keine Veränderungen der Computerdaten während der ersten vorher festgelegten Zeitdauer ermitteln oder wenn die elektronischen Mittel (30) zum Analysieren der beschafften mechanischen Daten keine Betätigung der Führungsmittel während der zweiten vorher festgelegten Zeitdauer ermitteln.

7. Überwachungsvorrichtung (10) gemäß Anspruch 6 in Kombination mit Anspruch 4 oder 5, wobei die Mittel zum Betätigen (34) dazu eingerichtet sind, nachfolgend zu den Warnmitteln (32) betätigt zu werden.

8. Überwachungsvorrichtung (10) gemäß Anspruch 6 oder 7, wobei die zweiten Überwachungsmittel (26) gegenüber den ersten Überwachungsmitteln (26) für die Ansteuerung der Mittel zum Betätigen (34) der Bremsen Vorrang hat.

9. Überwachungsvorrichtung (10) gemäß einem der vorangehenden Ansprüche, wobei die ersten Überwachungsmittel (20) und die zweiten Überwachungsmittel (26) deaktivierbar sind, beispielsweise mittels entsprechender erster und zweiter Hemmvorrichtungen.

10. Verfahren zum Überwachen eines Fahrers eines Schienenfahrzeugs mittels einer Überwachungsvorrichtung (10) gemäß einem der vorangehenden Ansprüche, **dadurch gekennzeichnet, dass** es aufweist:
- das Beschaffen, mittels der computergestützten Mittel (22), von Computer-Fahrdaten und das Ermitteln, mittels der computergestützten Mittel (24), der Abwesenheit von Veränderungen der Computerdaten während einer ersten vorher festgelegten Zeitdauer, und
- unabhängig davon das Beschaffen, mittels der elektronischen Mittel (28), von mechanischen Fahrdaten und das Ermitteln, mittels der elektronischen Mittel (30) zum Analysieren, dem Fehlen von Betätigung der Führungsmittel während einer zweiten vorher festgelegten Zeitdauer, wobei die erste vorher festgelegte Zeitdauer kürzer ist als die zweite vorher festgelegte Zeitdauer.

## Claims

1. A watch device (10) for a conductor of a railway vehicle including driving means (12), comprising:
- first watch means (20), comprising:
• computer means (22) for recovering computer driving information function of an actuation of the driving means,
• computer means (24) for analyzing the recovered computer information, able to detect the absence of variations in the computer information during a first predefined period,
**characterized in that** the watch device (10) comprises second watch means (26), independent of the first watch means (20), and comprising:
• electronic means (28) for recovering by relaying mechanical driving information relative to the actuation of the driving means (12), and
• electronic means (30) for analyzing recovered mechanical information, able to detect the absence of actuation of the driving means for a second predefined period, such that the first predefined period is less than the second predefined period.

2. The watch device (10) according to claim 1, intended to equip a railway vehicle including a unit (18) for controlling and managing the train, the computer information being provided to the computer recovery means (22) by this unit (18) for control and management of the train.

3. The watch device (10) according to claim 1 or 2, wherein the first predefined period is of about 10 seconds, and the second predefined period is of about 1 minute.

4. The watch device (10) according to any of the preceding claims, including warning means (32) controlled by the first (20) and second (26) watch means, able to be actuated when the computer means (24) for analyzing recovered computer information do not detect any variations in the computer information during the first predefined period, or when the electronic means (30) for analyzing the recovered mechanical information do not detect any actuation of the driving means during the second predefined period.

5. The watch device (10) according to claim 4, wherein the warning means (32) include a light alarm and a sound alarm, the warning means (32) being configured so that the light alarm is actuated before the sound alarm, during a first predefined time interval before actuation of the sound alarm.

6. The watch device (10) according to any of the preceding claims, including means (34) for actuating a braking system of the railway vehicle controlled by the first (20) and second (26) watch means, able to be actuated when the computer means (24) for analyzing the recovered computer information do not detect any variations in the computer information during the first predefined period, or when the electronic means (30) for analyzing the recovered mechanical information do not detect any actuation of the driving means during the second predefined period.

7. The watch device (10) according to claim 6, taken in combination with claim 4 or 5, wherein the actuation means (34) are configured so as to be actuated subsequently to the alarm means (32).

8. The watch device (10) according to claim 6 or 7, wherein the second watch means (26) have priority on the first watch means (20) for controlling the means (34) for actuating the braking.

9. The watch device (10) according to any of the preceding claims, wherein the first (20) and second (26) watch means may be deactivated, for example by means of first and second respective inhibitory devices.

10. A method for monitoring a conductor of a railway vehicle, by means of a watch device (10) according to any of the preceding claims, **characterized in that** it includes:
- the recovery, by the computer means (22), of computer driving information, and the detection, by the computer means (24) of the absence of variations of the computer information during a first predefined period, and
- independently, the recovery by the electronic means (28) of mechanical driving information, and the detection, by the electronic analysis means (30) of the absence of actuation of the driving means during a second predefined period, such that the first predefined period is less than the second predefined period.
